(19)

Europäisches
Patentamt
European
Patent Office
Office européen
des brevets

(11) **EP 3 072 592 A1**

(12) **EUROPEAN PATENT APPLICATION**
published in accordance with Art. 153(4) EPC

(43) Date of publication:
**28.09.2016 Bulletin 2016/39**

(21) Application number: **14862864.7**

(22) Date of filing: **18.11.2014**

(51) Int Cl.:
***B01J 37/18*** (2006.01)       ***B01J 23/46*** (2006.01)
***B01J 23/75*** (2006.01)       ***C07C 1/06*** (2006.01)
***C07C 9/00*** (2006.01)       ***C07B 61/00*** (2006.01)

(86) International application number:
**PCT/JP2014/080529**

(87) International publication number:
**WO 2015/072573 (21.05.2015 Gazette 2015/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.11.2013  JP 2013238107**

(71) Applicant: **JX Nippon Oil & Energy Corporation
Chiyoda-ku
Tokyo 100-8162 (JP)**

(72) Inventors:
• **TAKAHAMA, Koshi**
 **Tokyo 100-8162 (JP)**
• **NAGAYASU, Yoshiyuki**
 **Tokyo 100-8162 (JP)**
• **HAYASAKA, Kazuaki**
 **Tokyo 100-8162 (JP)**

(74) Representative: **Grünecker Patent- und
Rechtsanwälte
PartG mbB
Leopoldstraße 4
80802 München (DE)**

(54) **PRODUCTION METHOD FOR CATALYST FOR FISCHER-TROPSCH SYNTHESIS, AND PRODUCTION METHOD FOR HYDROCARBON**

(57)    A method for producing a catalyst for a Fischer-Tropsch synthesis, comprising a reduction step of obtaining the catalyst for a Fischer-Tropsch synthesis through a reduction treatment of an unreduced catalyst, wherein the unreduced catalyst comprises a carrier obtained by calcining a carrier precursor containing silica and a zirconium compound, and cobalt oxide and/or ruthenium oxide carried on the carrier; the content of zirconium in the unreduced catalyst is 0.01 to 7% by mass in terms of zirconium oxide relative to the total mass of the unreduced catalyst; and in the reduction step, a reducing gas is brought into contact with the unreduced catalyst under the conditions of a GHSV of 200 h$^{-1}$ or more and 1500 h$^{-1}$ or less and a linear velocity of 20 mm/s or more to perform the reduction treatment of the unreduced catalyst.

EP 3 072 592 A1

## Description

## Technical Field

The present invention relates to a production method for a catalyst for a Fischer-Tropsch synthesis and a production method for a hydrocarbon.

## Background Art

A reaction to synthesize a hydrocarbon from a synthesis gas composed of hydrogen and carbon monoxide as main components is called the Fischer-Tropsch synthesis (FT synthesis), and is used in production of fuels or the like. As a catalyst used in this FT synthesis reaction, for example, Patent Literature 1 discloses a catalyst which carries an active metal such as cobalt or iron on a carrier such as silica or alumina, and Patent Literature 2 discloses a catalyst containing cobalt, zirconium, or titanium, and silica.

## Citation List

## Patent Literature

Patent Literature 1: Japanese Unexamined Patent Publication No. H4-227847
Patent Literature 2: Japanese Unexamined Patent Publication No. S59-102440

## Summary of Invention

## Technical Problem

The catalyst used in the FT synthesis reaction (hereinafter, referred to as "FT synthesis catalyst" in some cases) is prepared as follows, for example. Namely, first, a carrier such as silica or alumina is impregnated with a cobalt salt, a ruthenium salt, and/or the like, and the resulting product is calcined to obtain a catalyst carrying cobalt oxide and/or ruthenium oxide (unreduced catalyst). For the catalyst thus obtained to demonstrate sufficient activity in the FT synthesis reaction, the catalyst should be brought into contact with a reducing gas (such as hydrogen gas) to be subjected to a reduction treatment to convert cobalt and/or ruthenium as (an) active metal(s) from (an) oxide(s) to a metal.

An object of the present invention is to provide a production method which can produce a catalyst for an FT synthesis subjected to a reduction treatment and having high reaction activity in the Fischer-Tropsch synthesis reaction, and a method for producing a hydrocarbon using an FT synthesis catalyst obtained by the production method.

## Solution to Problem

One aspect according to the present invention relates to a production method for producing a catalyst for a Fischer-Tropsch synthesis. The production method comprises a reduction step of obtaining the catalyst for a Fischer-Tropsch synthesis through a reduction treatment of an unreduced catalyst.

In the production method, the unreduced catalyst comprises a carrier obtained by calcining a carrier precursor containing silica and a zirconium compound, and cobalt oxide and/or ruthenium oxide carried on the carrier, and the content of zirconium in the unreduced catalyst is 0.01 to 7% by mass in terms of zirconium oxide relative to the total mass of the unreduced catalyst.

Moreover, in the reduction step, a reducing gas is brought into contact with the unreduced catalyst under the conditions of a GHSV of 200 $h^{-1}$ or more and 1500 $h^{-1}$ or less and a linear velocity of 20 mm/s or more to perform the reduction treatment of the unreduced catalyst.

The unreduced catalyst having a specific content of zirconium can be subjected to a reduction treatment under the specific conditions to obtain a catalyst for a Fischer-Tropsch synthesis having high reaction activity.

In one aspect according to the present invention, in the reduction step, the reduction treatment of the unreduced catalyst can be performed such that the degree of reduction of cobalt atoms represented by the following expression (1) and/or the degree of reduction of ruthenium atoms represented by the following expression (2) of the catalyst for a Fischer-Tropsch synthesis is 75 to 93%:

$$\text{degree (\%) of reduction of cobalt atoms} = 100 \times [\text{mass of metal cobalt atoms}]/[\text{mass of total cobalt atoms}] \;...(1)$$

$$\text{degree (\%) of reduction of ruthenium atoms} = 100 \times [\text{mass of metal ruthenium atoms}]/[\text{mass of total ruthenium atoms}] \;...(2)$$

The catalyst for a Fischer-Tropsch synthesis thus obtained through the reduction treatment has higher reaction activity.

Another aspect according to the present invention relates to a catalyst for a Fischer-Tropsch synthesis produced by the production method. Such a catalyst for a Fischer-Tropsch synthesis has high reaction activity, and can be suitably used in the Fischer-Tropsch synthesis reaction.

Another aspect according to the present invention relates to a method for producing a hydrocarbon, comprising a step of reacting carbon monoxide with hydrogen gas in the presence of the catalyst for a Fischer-Tropsch synthesis produced by the production method to obtain a hydrocarbon. In such a method for producing a hydrocarbon, the catalyst for a Fischer-Tropsch synthesis has high reaction activity, and therefore hydrocarbons can be efficiently produced.

**Advantageous Effects of Invention**

According to the present invention, a production method which can produce a catalyst for a Fischer-Tropsch synthesis having high reaction activity, and a method for producing a hydrocarbon using the catalyst for a Fischer-Tropsch synthesis obtained by the production method are provided.

**Description of Embodiments**

A suitable embodiment of a production method for a catalyst for a Fischer-Tropsch synthesis according to the present invention will be described below.

The production method according to the present embodiment comprises a reduction step of obtaining a catalyst for a Fischer-Tropsch synthesis (hereinafter, referred to as "catalyst for an FT synthesis" in some cases) through a reduction treatment of an unreduced catalyst.

In the present embodiment, the unreduced catalyst comprises a carrier obtained by calcining a carrier precursor containing silica and a zirconium compound, and cobalt oxide and/or ruthenium oxide carried on the carrier, and the content of zirconium in the unreduced catalyst is 0.01 to 7% by mass in terms of zirconium oxide relative to the total mass of the unreduced catalyst.

Moreover, in the present embodiment, in the reduction step, a reducing gas is brought into contact with the unreduced catalyst under the conditions of a GHSV of 200 $h^{-1}$ or more and 1500 $h^{-1}$ or less and a linear velocity of 20 mm/s or more to perform the reduction treatment of the unreduced catalyst.

Such a specific unreduced catalyst can be subjected to a reduction treatment under the specific conditions to obtain a catalyst for a Fischer-Tropsch synthesis having high reaction activity in the Fischer-Tropsch synthesis reaction.

Hereinafter, the unreduced catalyst and the reduction step according to the present embodiment will be described in detail.

(Unreduced catalyst)

The unreduced catalyst comprises a carrier obtained by calcining a carrier precursor containing silica and a zirconium compound, and cobalt oxide and/or ruthenium oxide carried on the carrier.

The content of zirconium in the unreduced catalyst is 0.01 to 7% by mass in terms of zirconium oxide relative to the total mass of the unreduced catalyst; because a large amount of zirconia may degrade reduction properties of cobalt and/or ruthenium to cause a reduction in initial activity, the content is preferably 0.1 to 6% by mass, more preferably 0.5 to 5.5% by mass.

When the unreduced catalyst contains cobalt oxide, the content is preferably 10 to 35% by mass, more preferably 20 to 30% by mass relative to the total mass of the unreduced catalyst from the viewpoint of obtaining a catalyst for an FT synthesis having higher reaction activity.

Moreover, when the unreduced catalyst contains ruthenium oxide, the content is preferably 5 to 35% by mass, more preferably 10 to 20% by mass relative to the total mass of the unreduced catalyst. A catalyst for an FT synthesis having ruthenium as active sites is characterized in higher activity than those of catalysts having cobalt as active sites, and high wax selectivity, and may significantly reduce the amount of the catalyst to be used.

Moreover, when the unreduced catalyst contains cobalt oxide and ruthenium oxide, the total content of these oxides is preferably 5 to 35% by mass, more preferably 10 to 30% by mass relative to the total mass of the unreduced catalyst.

The average particle size of the unreduced catalyst is preferably 10 $\mu$m to 10 mm, more preferably 10 $\mu$m to 5 mm, still more preferably 10 to 150 $\mu$m, further still more preferably 30 to 100 $\mu$m. The average particle size of the unreduced catalyst can be measured using a particle size distribution analyzer; for example, the average particle size of the unreduced catalyst is automatically measured, and is calculated using Coulter Counter Multisizer 3 manufactured by Beckman Coulter, Inc. by an electrical sensing zone method (Coulter Principle).

The unreduced catalyst may further contain a noble metal. As the noble metal, one or more of Pt, Pd, Au, and Re are preferred, and Pt is more preferred. If a noble metal is contained, reduction of cobalt and/or ruthenium can be promoted. Thereby, oxidation of the cobalt metal by water generated during the Fischer-Tropsch synthesis reaction, the oxidation inferred as a cause to degrade the catalyst, can be prevented.

The amount of the noble metal to be carried is preferably 0.001 to 1% by mass, more preferably 0.001 to 0.5% by mass relative to the total mass of the unreduced catalyst in view of the balance between the above-mentioned effect and economy.

It is preferred that the unreduced catalyst have a mesopore volume of 0.35 $cm^3$/g or more. The mesopore volume of the unreduced catalyst is calculated by the following method. First, for example, a pre-treatment for evacuation at 300°C for 5 hours is performed to remove moisture adsorbed on the unreduced catalyst. In the catalyst after this pre-treatment, adsorption and desorption isotherms are automatically measured using BELSORP-max manufactured by BEL Japan, Inc. at a liquid nitrogen temperature (-196°C) by a volumetric gas adsorption method using nitrogen. The software for analysis (BEL Master (TM)) attached to the apparatus can be used in analysis of the data, and the measured adsorption and desorption isotherms of nitrogen are automatically analyzed by the BJH method to calculate the mesopore volume ($cm^3$/g) per unit mass of the unreduced catalyst. The BJH method is a method of determining the average pore diameter from a desorption isotherm, which represents the relation between the relative pressure and the amount of adsorption when an adsorbate is detached (E.P. Barrett, L.G Joyner, P.H. Halenda: J. Am. Chem. Soc., 73, 373 (1951)).

The mesopore volume of the unreduced catalyst is more preferably 0.35 to 0.8 $cm^3$/g, still more preferably 0.4 to 0.7 $cm^3$/g. At a mesopore volume of the unreduced catalyst of less than 0.35 $cm^3$/g, degradation of the catalyst tends to be generated during the initial stage of the reaction. In contrast, at a mesopore volume of the unreduced catalyst of more than 0.8 $cm^3$/g, wear of the catalyst is readily caused because the pores are excessively large. For this reason, degradation of the catalyst due to wear loss tends to be generated during the reaction.

It is preferred that the unreduced catalyst have a specific surface area of 130 $m^2$/g or more. The specific surface area of the unreduced catalyst is calculated by the following method. First, for example, a pre-treatment for evacuation at 300°C for 5 hours is performed to remove moisture adsorbed on the unreduced catalyst. In the catalyst after this pre-treatment, adsorption and desorption isotherms are automatically measured using BELSORP-max manufactured by BEL Japan, Inc. at a liquid nitrogen temperature (-196°C) by a volumetric gas adsorption method using nitrogen. The software for analysis (BEL Master (TM)) attached to the apparatus can be used in analysis of the data, and the measured adsorption and desorption isotherms of nitrogen are automatically analyzed by the BET expression to calculate the surface area ($m^2$/g) per unit mass of the unreduced catalyst.

The specific surface area of the unreduced catalyst is preferably 130 to 400 $m^2$/g, more preferably 140 to 200 $m^2$/g. At a specific surface area of less than 130 $m^2$/g, degradation of the catalyst tends to be generated during the initial stage of the reaction. In contrast, at a specific surface area of more than 400 $m^2$/g, wear of the catalyst is readily generated during the reaction, and degradation of the catalyst due to wear loss tends to be generated.

In the present embodiment, as silica, at least one selected from the group consisting of colloidal silica, liquid glass, Aerosil, aerogel, silica sol, silica gel, powder silica, and silicates can be preferably used. It is preferred that silica be calcined at a predetermined calcining temperature $T_1$ described later.

The specific surface area of silica is preferably 50 to 500 $m^2$/g, more preferably 150 to 400 $m^2$/g. At a specific surface area of less than 50 $m^2$/g, the active metal such as cobalt tends to readily aggregate. In contrast, at a specific surface area of more than 500 $m^2$/g, the pores are readily clogged as a result of the catalyst carrying the active metal such as cobalt because the pore diameter tends to be excessively decreased.

The specific surface area of silica is calculated by the following method. First, for example, a pre-treatment for evacuation at 300°C for 5 hours is performed to remove moisture adsorbed on silica. In silica after this pre-treatment, adsorption and desorption isotherms are automatically measured using BELSORP-max manufactured by BEL Japan, Inc. at a liquid nitrogen temperature (-196°C) by a volumetric gas adsorption method using nitrogen. The software for analysis (BEL Master (TM)) attached to the apparatus can be used in analysis of the data, and the measured adsorption and desorption isotherms of nitrogen are automatically analyzed by the BET expression to calculate the surface area ($m^2$/g) per unit mass of silica.

The average pore diameter of silica is preferably 8 to 25 nm, more preferably 10 to 20 nm, still more preferably 10 to 15 nm. At an average pore diameter of less than 8 nm, the reaction activity tends to be decreased due to diffusion limitation. In contrast, at an average pore diameter of more than 25 nm, the surface area of the carrier tends to be decreased to readily aggregate the carried metal, causing a reduction in reaction activity.

The average pore diameter of the silica is calculated by the following method. First, for example, a pre-treatment for evacuation at 300°C for 5 hours is performed to remove moisture adsorbed on silica. In silica after this pre-treatment, adsorption and desorption isotherms are automatically measured using BELSORP-max manufactured by BEL Japan, Inc. at a liquid nitrogen temperature (-196°C) by a volumetric gas adsorption method using nitrogen. The software for analysis (BEL Master (TM)) attached to the apparatus can be used in analysis of the data, and the measured adsorption and desorption isotherms of nitrogen is automatically analyzed by the BJH method to calculate the average pore diameter of silica.

The carrier precursor can be prepared, for example, using silica and a zirconium compound by an impregnation method represented by an Incipient Wetness method.

The shape of silica is not particularly limited; products having a variety of shapes such as spherical products, pulverized products, and cylindrical shaped articles can be used, and a shape suitable for the process can be selected. The average particle size of silica is also not limited; for example, silica having an average particle size of 5 $\mu$m to 10 mm, preferably 5 $\mu$m to 5 mm, more preferably 5 to 150 $\mu$m, still more preferably 10 to 100 $\mu$m can be appropriately selected according to the process, and can be used. The average particle size of silica can be measured using a particle size distribution analyzer; for example, the average particle size of silica is automatically measured, and is calculated using Coulter Counter Multisizer 3 manufactured by Beckman Coulter, Inc. by an electrical sensing zone method (Coulter Principle).

The carrier precursor can contain carrier materials other than silica, i.e., one or more selected from the group consisting of alumina, titania, magnesia, ceria, zirconia, and composite oxides thereof. Examples of the composite oxides include silica-alumina, silica-titania, alumina-titania, silica-zirconia, alumina-zirconia, and titania-zirconia.

Examples of zirconium compounds include zirconyl nitrate ($ZrO(NO_3)_2$), zirconium oxychloride ($ZrOCl_2$), zirconium hydroxide oxochloride ($ZrO(OH)Cl$), zirconyl sulfate ($ZrOSO_4$), zirconyl acetate ($ZrO(C_2H_3O_2)_2$), and zirconyl ammonium carbonate ($(NH_4)_2ZrR(CO_3)_2$). Among these zirconium compounds, zirconyl nitrate, zirconyl acetate, and zirconyl ammonium carbonate are preferred. These zirconium compounds can be used singly or in combinations of two or more.

Hereinafter, a suitable production method for an unreduced catalyst will be described in detail.

This production method comprises a step of calcining a carrier precursor, which contains silica calcined at a temperature $T_1$ and a zirconium compound, at a temperature $T_2$ to obtain a carrier; and a step of calcining a catalyst precursor containing the carrier and a cobalt compound and/or a ruthenium compound at a temperature $T_3$; it is preferred that $T_1$, $T_2$, and $T_3$ satisfy the conditions represented by the following expressions (A) to (C):

$$T_1 \geq T_3 \,...(A)$$

$$250°C \leq T_2 \leq 450°C \,...(B)$$

$$250°C \leq T_3 \leq 450°C \,...(C)$$

It is preferred that the calcining temperature $T_1$ of silica satisfy the above expression (A); the calcining temperature $T_1$ is preferably 250 to 700°C, more preferably 400 to 650°C because calcining of silica at a high temperature tends to cause sintering of silica, and it is difficult to obtain a desired average pore diameter. The calcining time can be 0.5 to 10 hours, for example. The calcining can be performed in the presence of molecular oxygen such as in the air, for example.

As a method of preparing a carrier precursor, an impregnation method represented by an Incipient Wetness method can be used. The carrier precursor, after impregnation, can be dried, for example, at a drying temperature of preferably 50 to 150°C, more preferably 70 to 120°C for preferably 0.5 to 48 hours, more preferably 1 to 24 hours.

The calcining temperature $T_2$ of the carrier precursor is 250°C or more and 450°C or less; 250 to 300°C is more preferred from the viewpoint of maintaining a high mesopore volume. At $T_2$ of more than 450°C, such a temperature is not preferred because the form of zirconia is converted from amorphous to crystal. At $T_2$ of less than 250°C, such a temperature is equal to or less than the decomposition starting temperature of the zirconium compound, and it is difficult to obtain sufficient catalyst activity. For this reason, it is preferred that the calcining temperature be equal to or higher than the decomposition starting temperature of the zirconium compound to be used.

Next, the step of calcining a catalyst precursor containing the carrier obtained through the above step and a cobalt compound and/or a ruthenium compound at a temperature $T_3$ will be described.

As the cobalt compound used in the present embodiment, a compound having cobalt in the form of a salt or a complex in the molecule can be used. Examples thereof include nitrates, hydrochlorides, sulfates, formates, acetates, propionates, oxalates, and acetylacetonate. Specifically, examples thereof can include cobalt nitrate, cobalt chloride, cobalt formate, cobalt propionate, cobalt acetate, and cobalt acetylacetonate. These cobalt compounds can be used singly or in combinations of two or more.

Examples of the ruthenium compound used in the present embodiment include ruthenium halides such as ruthenium chloride and ruthenium bromide, ruthenium(IV) oxide, ruthenium(III) hydroxide, acetylacetonatoruthenium, hexaammineruthenium(II) chlorides, and triruthenium dodecacarbonyl.

As a method of preparing a catalyst precursor, an impregnation method represented by an Incipient Wetness method can be used. At this time, it is preferred that the setting be performed such that the content of the cobalt compound in the catalyst precursor is 10 to 35% by mass relative to the total mass of the unreduced catalyst in terms of cobalt oxide (tricobalt tetraoxide). From the viewpoint of obtaining high reactivity, it is more preferred that the content of the cobalt compound in the catalyst precursor be 20 to 30% by mass relative to the total mass of the unreduced catalyst in terms of cobalt oxide (tricobalt tetraoxide).

Moreover, in cases where a ruthenium compound is used, it is preferred that the setting be performed such that the content of the ruthenium compound in the catalyst precursor is 5 to 35% by mass relative to the total mass of the unreduced catalyst in terms of ruthenium oxide ($RuO_2$). From the viewpoint of obtaining high reactivity, it is more preferred that the content of the ruthenium compound in the catalyst precursor be 10 to 20% by mass relative to the total mass of the unreduced catalyst in terms of ruthenium oxide ($RuO_2$).

The catalyst precursor, after impregnation, can be dried, for example, at a drying temperature of preferably 50 to 150°C, more preferably 70 to 120°C for preferably 0.5 to 48 hours, more preferably 1 to 24 hours.

As the calcining temperature $T_3$ of the catalyst precursor, 250°C or more and 450°C or less is preferred; 400 to 450°C is more preferred from the viewpoint of obtaining high dispersibility of the cobalt compound and/or the ruthenium compound. At $T_3$ of more than 450°C, such a temperature is not preferred because the form of zirconia is converted from amorphous to crystal. It is preferred that the calcining temperature be equal to or higher than the decomposition starting temperature of the cobalt compound and/or the ruthenium compound to be used.

(Reduction step)

The reduction step is a step of obtaining a catalyst for an FT synthesis through a reduction treatment of the unreduced catalyst.

The reduction treatment can be performed by bringing a reducing gas into contact with the unreduced catalyst under the conditions of a GHSV of 200 $h^{-1}$ or more and 1500 $h^{-1}$ or less and a linear velocity of 20 mm/s or more.

The reducing gas is a gas containing molecular hydrogen, and contains preferably 70% by volume or more of molecular hydrogen, more preferably 95% by volume or more of molecular hydrogen. At a content of the molecular hydrogen of less than 70% by volume, such a content is not preferred because reduction efficiency tends to be insufficient. Examples of specific gas used in the reduction treatment include hydrogen gas, and a mixed gas of hydrogen gas and an inert gas such as nitrogen gas; hydrogen gas is particularly preferred.

In cases where the gas used in the reduction treatment further contains carbon monoxide, carbon monoxide is not preferred because the FT synthesis reaction occurs during reduction under a high pressure reduction condition such as an absolute pressure of 1.1 MPa or more, which causes a problem of heat generation or the like; however, a slight amount of carbon monoxide is allowed.

The reduction temperature is preferably 250 to 500°C, more preferably 350 to 450°C. At a reduction temperature of less than 250°C, the degree of reduction of cobalt atoms (ratio of the mass of metal cobalt atoms to the total mass of cobalt atoms) and/or the degree of reduction of ruthenium atoms (ratio of the mass of metal ruthenium atoms to the total mass of ruthenium atoms) tends not to be sufficiently enhanced. In contrast, at a reduction temperature of more than 500°C, aggregation of metal cobalt and/or metal ruthenium may excessively progress to reduce activity.

The reduction pressure is not particularly limited; a pressure from normal pressure to about 5 MPa is selected. Although it is difficult to specify the reduction time in general because the reduction time significantly depends on the temperature, the atmosphere, the apparatus to be used, and the like, the reduction time is usually about 0.5 to 60 hours.

The reduction treatment may be performed in a catalyst production facility, or may be performed in a facility in which hydrocarbons are produced by the FT synthesis method, or a facility attached thereto.

The reduction treatment can be performed in a reduction reaction furnace or a reduction reaction column usually known, and can be performed, for example, in a fixed bed, a fluidized bed, a rotary kiln, or the like. Examples of a preferred process include fluidized beds and rotary kilns from the viewpoint of contact efficiency of the reducing gas with the catalyst.

In the reduction treatment, the GHSV is preferably 200 h$^{-1}$ or more; in consideration of economic loss, the GHSV is more preferably 200 h$^{-1}$ or more and 1500 h$^{-1}$ or less, still more preferably 600 h$^{-1}$ or more and 1500 h$^{-1}$ or less.

Moreover, in the reduction treatment, the linear velocity is preferably 20 mm/s or more, more preferably 20 mm/s or more and 150 mm/s or less, still more preferably 35 mm/s or more and 150 mm/s or less.

In this specification, the GHSV during the reduction treatment indicates the volume flow rate of the reducing gas per unit volume of the unreduced catalyst, and is a value determined from an expression "volume flow rate of the reducing gas/volume of the unreduced catalyst," for example. Moreover, the linear velocity during the reduction treatment indicates the rate of the reducing gas passing through the cross section of a reduction reaction furnace (or reduction reaction column) filled with the unreduced catalyst, and is a value obtained from the calculation expression "volume flow rate of the reducing gas/cross sectional area of the reduction reaction furnace (or reduction reaction column) filled with the unreduced catalyst," for example.

In the reduction step, it is preferred that the reduction treatment be performed such that the degree of reduction of cobalt atoms represented by the following expression (1) and/or the degree of reduction of ruthenium atoms represented by the following expression (2) of the resulting catalyst for an FT synthesis is 75 to 93%:

$$\text{degree (\%) of reduction of cobalt atoms} = 100 \times [\text{mass of metal cobalt atoms}]/[\text{mass of total cobalt atoms}] \ ...(1)$$

$$\text{degree (\%) of reduction of ruthenium atoms} = 100 \times [\text{mass of metal ruthenium atoms}]/[\text{mass of total ruthenium atoms}] \ ...(2)$$

The degree of reduction of cobalt atoms of the catalyst for an FT synthesis is preferably 75 to 93%, more preferably 80 to 93%. At a degree of reduction of less than 75%, the activity of the catalyst for an FT synthesis tends to be low. In contrast, a treatment at a high temperature or for a long time is needed for reduction such that the degree of reduction exceeds 93%; however, in cases where reduction is performed under such a condition, the cobalt metal particles contained in the catalyst for an FT synthesis tend to aggregate to reduce the activity.

The degree of reduction of cobalt atoms contained in the catalyst for an FT synthesis is measured using a TPR (Temperature Programmed Reduction) measurement apparatus as follows. First, a sample unreduced catalyst (cobalt atom: in the state of oxide, degree of reduction: 0%) as a reference is TPR measured with the TPR measurement apparatus, and the amount of m/z = 18 ($H_2O$) generated, (1) is measured. Based on the value obtained, the "mass of total cobalt atoms" in the unreduced catalyst is determined as an "amount of cobalt atoms $\times$ 4/3 $\times$ (amount of m/z = 18 generated, (1))molecular weight of water." Next, the target catalyst to be measured is TPR measured with the TPR measurement apparatus under the same conditions as those in the measurement of the unreduced catalyst, and the amount of m/z = 18, (2) is calculated. Based on the value obtained, the "mass of the unreduced cobalt atom" in the catalyst for an FT synthesis is determined as an "amount of cobalt atoms $\times$ 4/3 $\times$ (amount of m/z = 18 generated, (2))/molecular weight of water." The "mass of metal cobalt atoms" is equal to the mass obtained from "mass of total cobalt atoms" - "mass of the unreduced cobalt atoms." Accordingly, degree (%) of reduction of cobalt atoms = 100 $\times$ [mass of metal cobalt atoms]/[mass of total cobalt atoms] = 100 $\times$ ("mass of total cobalt atoms" - "mass of the unreduced cobalt atom")/"mass of total cobalt atoms" = 100 $\times$ ("amount of m/z = 18 generated, (1)" - "amount of m/z = 18 generated, (2)")/("amount of m/z = 18 generated, (1)).

Moreover, the degree of reduction of ruthenium atoms of the catalyst for an FT synthesis is preferably 75 to 93%, more preferably 80 to 93%. At a degree of reduction of less than 75%, the activity of the catalyst for an FT synthesis tends to be low. In contrast, a treatment at a high temperature or for a long time is needed for reduction such that the degree of reduction exceeds 93%; however, in cases where reduction is performed under such a condition, the ruthenium metal particles contained in the catalyst for an FT synthesis tend to aggregate to reduce the activity.

The degree of reduction of ruthenium atoms contained in the catalyst for an FT synthesis is measured using a TPR (Temperature Programmed Reduction) measurement apparatus in the same manner as in the measurement of the degree of reduction of cobalt atoms.

Next, a suitable embodiment of the method for producing a hydrocarbon according to the present invention will be described below.

The method for producing a hydrocarbon according to the present embodiment is characterized in that carbon monoxide and hydrogen gas are subjected to the FT synthesis reaction in the presence of the catalyst for an FT synthesis described above to obtain a hydrocarbon.

The raw material when the FT synthesis reaction is performed is not particularly limited as long as it is a synthesis gas composed of molecular hydrogen and carbon monoxide as main components; a synthesis gas having a molar ratio of hydrogen/carbon monoxide of 1.5 to 2.5 is suitable, and a synthesis gas having a molar ratio of 1.8 to 2.2 is more suitable.

The FT synthesis reaction can be performed by a known process as a reaction process for an FT synthesis, such as a fixed bed, a supercritical fixed bed, a slurry bed, or a fluidized bed. Examples of a preferred process can include fixed beds, supercritical fixed beds, and slurry beds.

The reaction conditions for the FT synthesis reaction are not particularly limited, and the FT synthesis reaction can be performed under known conditions. For example, the reaction can be performed at a reaction temperature of 200 to 280°C, a gas space velocity of 1000 to 3000 $h^{-1}$, W (catalyst mass)/F (synthesis gas flow rate) of 1 to 10 g·h/mol, and an absolute pressure in the range of 1.1 to 5.1 MPa.

As above, a suitable embodiment according to the present invention has been described, but the present invention will not be limited to the embodiment.

**Examples**

Hereinafter, the present invention will be more specifically described by way of Examples, but the present invention will not be limited to the Examples.

(Example 1)

<Preparation of unreduced catalyst A-1>

Spherical silica particles (average pore diameter: 15 nm, average particle size: 100 $\mu$m, specific surface area: 255 $m^2$/g) were calcined in the air at 650°C for 3 hours. Next, the calcined silica particles were impregnated by an Incipient Wetness method with zirconyl nitrate in an amount such that the content relative to the total mass of the unreduced catalyst to be formed was 3% by mass in terms of zirconium oxide. The silica particles after impregnated with zirconyl nitrate were dried at 120°C for 12 hours, and were then calcined in the air at 300°C for 3 hours to obtain a carrier.

The resulting carrier was impregnated by the Incipient Wetness method with an aqueous solution of cobalt nitrate in an amount such that the content relative to the total mass of the unreduced catalyst to be formed was 30% by mass in terms of tricobalt tetraoxide. The carrier after impregnated with the aqueous solution of cobalt nitrate was dried at 120°C for 12 hours, and was then calcined in the air at 450°C for 3 hours to obtain an unreduced catalyst A-1.

The mass of the unreduced catalyst obtained here is used as the reference when the amounts of zirconyl nitrate and the aqueous solution of cobalt nitrate to be impregnated are determined. Namely, the mass of zirconium oxide (zirconia) into which the total mass of zirconia atoms carried is converted and the mass of tricobalt tetraoxide (cobalt oxide) into which the total mass of cobalt atoms carried is converted are each used as the reference.

<Preparation of catalyst for FT synthesis (reduction of unreduced catalyst)>

The unreduced catalyst A-1 was reduced under a hydrogen stream in a rotary kiln. The linear velocity of hydrogen used in reduction was set at 52 mm/s, and the GHSV was set at 300 $h^{-1}$; the temperature of the catalyst layer in the rotary kiln was raised from room temperature to 350°C, and was kept at 350°C for 7 hours to obtain an activated catalyst for an FT synthesis.

<Measurement of amount of hydrogen adsorption>

The amount of hydrogen adsorption at 100°C of the catalyst for an FT synthesis was measured using an apparatus for measuring a degree of metal dispersion (BEL-METAL-3 manufactured by BEL Japan, Inc.) as follows. First, the target unreduced catalyst to be measured was weighed, was placed in the apparatus for measuring a degree of metal dispersion, and was subjected to the reduction treatment in hydrogen gas under the same reduction conditions as those used in reduction to obtain the catalyst for an FT synthesis. Subsequently, a sample of the catalyst for an FT synthesis obtained in the apparatus for measuring a degree of metal dispersion was cooled to room temperature, and the temperature was raised to the measurement temperature of 100°C; then, hydrogen gas was adsorbed, and the amount of adsorbed hydrogen gas was calculated. The amount of the adsorbed hydrogen gas was divided by the mass of the catalyst for an FT synthesis placed to calculate the amount of hydrogen gas adsorption per unit mass of the catalyst. Moreover, the amount of adsorbed hydrogen gas was divided by the mass of the active metal (cobalt and/or ruthenium) in the catalyst for an FT synthesis to calculate the amount of hydrogen gas adsorption per unit mass of the active metal (cobalt and/or ruthenium). The obtained results are shown in Table 1. In the table, "degree of reduction $\times$ amount of hydrogen adsorption, (2) (ml/g)" is a value indicating the number of active sites of the catalyst for convenience.

<FT synthesis reaction>

5 g of the resulting catalyst for an FT synthesis was extracted under an inert atmosphere in a dry box to avoid oxidation, and was placed with 30 ml of normal hexadecane in an autoclave reactor made of stainless steel and having an inner volume of 100 ml. A mixed gas of hydrogen gas/carbon monoxide gas at 2/1 (molar ratio) was used as a raw material, and the Fischer-Tropsch synthesis reaction was started under the conditions of W (catalyst mass)/F (synthesis gas flow rate) = 3 g·h/mol, a temperature of 220°C, a pressure of 2.3 MPa, and a stirring rate of 1000 rpm. The gas composition at the exit of the reactor was analyzed by gas chromatography over time; from this analysis data, the conversion rate of carbon monoxide (CO conversion rate) was calculated. The average of the CO conversion rate after 24 hours from the start of the reaction is shown in Table 1.

(Examples 2 and 3)

Catalysts for an FT synthesis were obtained in the same manner as in Example 1 except that the linear velocity and the GHSV of the reducing gas in the reduction treatment of the unreduced catalyst A-1 were varied as shown in Table 1. Moreover, measurement of the amount of hydrogen adsorption and the FT synthesis reaction were performed in the same manner as in Example 1. The results are shown in Table 1.

(Example 4)

<Preparation of unreduced catalyst A-2>

Spherical silica particles (average pore diameter: 15 nm, average particle size: 100 $\mu$m, specific surface area: 255 m$^2$/g) were calcined in the air at 650°C for 3 hours. Next, the calcined silica particles were impregnated by an Incipient Wetness method with zirconyl nitrate in an amount such that the content relative to the total mass of the unreduced catalyst to be formed was 5% by mass in terms of zirconium oxide. The silica particles after impregnated with zirconyl nitrate were dried at 120°C for 12 hours, and were then calcined in the air at 300°C for 3 hours to obtain a carrier.

The resulting carrier was impregnated by the Incipient Wetness method with an aqueous solution of cobalt nitrate in an amount such that the content relative to the total mass of the unreduced catalyst to be formed was 30% by mass in terms of tricobalt tetraoxide. The carrier after impregnated with the aqueous solution of cobalt nitrate was dried at 120°C for 12 hours, and was then calcined in the air at 450°C for 3 hours to obtain an unreduced catalyst A-2.

<Preparation of catalyst for an FT synthesis (reduction of unreduced catalyst)>

The unreduced catalyst A-2 was reduced under a hydrogen stream in a rotary kiln. The linear velocity of hydrogen used in reduction was set at 150 mm/s, and the GHSV was set at 250 h$^{-1}$; the temperature of the catalyst layer in the rotary kiln was raised from room temperature to 350°C, and was kept at 350°C for 7 hours to obtain an activated catalyst for an FT synthesis.

In the resulting catalyst for an FT synthesis, the measurement of the amount of hydrogen adsorption and the FT synthesis reaction were performed in the same manner as in Example 1. The results are shown in Table 1.

(Example 5)

A catalyst for an FT synthesis was obtained in the same manner as in Example 4 except that the linear velocity and the GHSV of the reducing gas in the reduction treatment of the unreduced catalyst A-2 were varied as shown in Table 2. Moreover, the measurement of the amount of hydrogen adsorption and the FT synthesis reaction were performed in the same manner as in Example 4. The results are shown in Table 2.

(Example 6)

<Preparation of unreduced catalyst A-3>

Spherical silica particles (average pore diameter: 10 nm, average particle size: 100 $\mu$m, specific surface area: 255 m$^2$/g) were calcined in the air at 650°C for 3 hours. Next, the calcined silica particles were impregnated by an Incipient Wetness method with zirconyl nitrate in an amount such that the content relative to the total mass of the unreduced catalyst to be formed was 7% by mass in terms of zirconium oxide. The silica particles after impregnated with zirconyl nitrate were dried at 120°C for 12 hours, and were then calcined in the air at 350°C for 3 hours to obtain a carrier.

The resulting carrier was impregnated by the Incipient Wetness method with an aqueous solution of cobalt nitrate in an amount such that the content relative to the total mass of the unreduced catalyst to be formed was 30% by mass in terms of tricobalt tetraoxide. The carrier after impregnated with the aqueous solution of cobalt nitrate was dried at 120°C for 12 hours, and was then calcined in the air at 450°C for 3 hours to obtain an unreduced catalyst A-3.

<Preparation of catalyst for FT synthesis (reduction of unreduced catalyst)>

The unreduced catalyst A-3 was reduced under a hydrogen stream in a rotary kiln. The linear velocity of hydrogen used in reduction was set at 32 mm/s, and the GHSV was set at 1200 h$^{-1}$; the temperature of the catalyst layer in the rotary kiln was raised from room temperature to 350°C, and was kept at 350°C for 7 hours to obtain an activated catalyst for an FT synthesis.

In the resulting catalyst for an FT synthesis, the measurement of the amount of hydrogen adsorption and the FT synthesis reaction were performed in the same manner as in Example 1. The results are shown in Table 2.

(Example 7)

<Preparation of unreduced catalyst A-4>

Spherical silica particles (average pore diameter: 10 nm, average particle size: 100 $\mu$m, specific surface area: 255 m$^2$/g) were calcined in the air at 650°C for 3 hours. Next, the calcined silica particles were impregnated by an Incipient Wetness method with zirconyl nitrate in an amount such that the content relative to the total mass of the unreduced catalyst to be formed was 7% by mass in terms of zirconium oxide. The silica particles after impregnated with zirconyl nitrate were dried at 120°C for 12 hours, and were then calcined in the air at 350°C for 3 hours to obtain a carrier.

The resulting carrier was impregnated by the Incipient Wetness method with an aqueous solution of cobalt nitrate in an amount such that the content relative to the total mass of the unreduced catalyst to be formed was 15% by mass in terms of tricobalt tetraoxide. The carrier after impregnated with the aqueous solution of cobalt nitrate was dried at 120°C for 12 hours, and was then calcined in the air at 450°C for 3 hours to obtain an unreduced catalyst A-4.

<Preparation of catalyst for FT synthesis (reduction of unreduced catalyst)>

The unreduced catalyst A-4 was reduced under a hydrogen stream in a rotary kiln. The linear velocity of hydrogen used in reduction was set at 32 mm/s, and the GHSV was set at 1200 h$^{-1}$; the temperature of the catalyst layer in the rotary kiln was raised from room temperature to 350°C, and was kept at 350°C for 7 hours to obtain an activated catalyst for an FT synthesis.

In the resulting catalyst for an FT synthesis, the measurement of the amount of hydrogen adsorption and the FT synthesis reaction were performed in the same manner as in Example 1. The results are shown in Table 2.

(Example 8)

<Preparation of unreduced catalyst A-5>

Spherical silica particles (average pore diameter: 15 nm, average particle size: 70 $\mu$m, specific surface area: 255 m$^2$/g) were calcined in the air at 650°C for 3 hours. Next, the calcined silica particles were impregnated by an Incipient Wetness method with zirconyl nitrate in an amount such that the content relative to the total mass of the unreduced catalyst to be formed was 3% by mass in terms of zirconium oxide. The silica particles after impregnated with zirconyl nitrate were dried at 120°C for 12 hours, and were then calcined in the air at 300°C for 3 hours to obtain a carrier.

The resulting carrier was impregnated by the Incipient Wetness method with an aqueous solution of ruthenium chloride such that the content relative to the total mass of the unreduced catalyst to be formed was 15% by mass in terms of ruthenium oxide ($RuO_2$). The carrier after impregnated with the aqueous solution of ruthenium chloride was dried at 120°C for 12 hours, and was then calcined in the air at 400°C for 3 hours to obtain an unreduced catalyst A-5.

<Preparation of catalyst for FT synthesis (reduction of unreduced catalyst)>

The unreduced catalyst A-5 was reduced under a hydrogen stream in a rotary kiln. The linear velocity of hydrogen used in reduction was set at 32 mm/s, and the GHSV was set at 1200 h$^{-1}$; the temperature of the catalyst layer in the rotary kiln was raised from room temperature to 350°C, and was kept at 350°C for 7 hours to obtain an activated catalyst for an FT synthesis.

In the resulting catalyst for an FT synthesis, the measurement of the amount of hydrogen adsorption and the FT synthesis reaction were performed in the same manner as in Example 1. The results are shown in Table 2.

(Comparative Examples 1 to 4)

Catalysts for an FT synthesis were obtained in the same manner as in Example 1 except that the linear velocity and the GHSV of the reducing gas in the reduction treatment of the unreduced catalyst A-1 were varied as shown in Table 3. Moreover, the measurement of the amount of hydrogen adsorption and the FT synthesis reaction were performed in the same manner as in Example 1. The results are shown in Table 3.

[Table 1]

| | | Example 1 | Example 2 | Example 3 | Example 4 |
|---|---|---|---|---|---|
| Catalyst composition | $Co_3O_4$ (% by mass) | 30 | 30 | 30 | 30 |
| | $RuO_2$ (% by mass) | | - | - | - |
| | $ZrO_2$ (% by mass) | 3 | 3 | 3 | 5 |
| | $SiO_2$ (% by mass) | 67 | 67 | 67 | 65 |
| Linear velocity of reducing gas (mm/s) | | 52 | 73 | 32 | 150 |
| GHSV of reducing gas ($h^{-1}$) | | 300 | 600 | 1200 | 250 |
| Degree of reduction of cobalt atoms (%) | | 89 | 91 | 90 | 89 |
| Degree of reduction of ruthenium atoms (%) | | - | - | - | - |
| Amount of hydrogen adsorption per unit mass of catalyst, (1) (ml/g, 100°C) | | 0.59 | 0.64 | 0.62 | 0.59 |
| Amount of hydrogen adsorption per unit mass of active metal, (2) (ml/g, 100°C) | | 3.4 | 3.6 | 3.5 | 3.5 |
| Degree of reduction $\times$ amount of hydrogen absorption, (2) (ml/g) | | 3.03 | 3.28 | 3.15 | 3.12 |
| CO conversion rate (%) | | 53.5 | 54.7 | 53,5 | 53.5 |

[Table 2]

| | | Example 5 | Example 6 | Example 7 | Example 8 |
|---|---|---|---|---|---|
| Catalyst composition | $Co_3O_4$ (% by mass) | 30 | 30 | 15 | - |
| | $RuO_2$ (% by mass) | - | - | - | 15 |
| | $ZrO_2$ (% by mass) | 5 | 7 | 7 | 3 |
| | $SiO_2$ (% by mass) | 65 | 63 | 67 | 82 |
| Linear velocity of reducing gas (mm/s) | | 73 | 32 | 32 | 32 |
| GHSV of reducing gas ($h^{-1}$) | | 600 | 1200 | 1200 | 1200 |
| Degree of reduction of cobalt atoms (%) | | 90 | 87 | 88 | - |
| Degree of reduction of ruthenium atoms (%) | | - | - | - | 92 |
| Amount of hydrogen adsorption per unit mass of catalyst, (1) (ml/g, 100°C) | | 0.64 | 0.58 | 0.65 | 0.7 |
| Amount of hydrogen adsorption per unit mass of active metal, (2) (ml/g, 100°C) | | 3.6 | 3.4 | 3.7 | 3.8 |

(continued)

|  | Example 5 | Example 6 | Example 7 | Example 8 |
|---|---|---|---|---|
| Degree of reduction × amount of hydrogen adsorption, (2) (ml/g) | 3.24 | 2.96 | 3.26 | 3.50 |
| CO conversion rate (%) | 54.5 | 53.0 | 54.2 | 54.4 |

[Table 3]

| | | Comparative Example 1 | Comparative Example 2 | Comparative Example 3 | Comparative Example 4 |
|---|---|---|---|---|---|
| Catalyst composition | $Co_3O_4$ (% by mass) | 30 | 30 | 30 | 30 |
| | $RuO_2$ (% by mass) | - | - | - | - |
| | $ZrO_2$ (% by mass) | 3 | 3 | 3 | 3 |
| | $SiO_2$ (% by mass) | 67 | 67 | 67 | 67 |
| Linear velocity of reducing gas (mm/s) | | 0.7 | 1 | 100 | 16 |
| GHSV of reducing gas ($h^{-1}$) | | 300 | 400 | 100 | 580 |
| Degree of reduction of cobalt atoms (%) | | 78 | 80 | 82 | 88 |
| Degree of reduction of ruthenium atoms (%) | | - | - | - | - |
| Amount of hydrogen adsorption per unit mass of catalyst, (1) (ml/g, 100°C) | | 0.19 | 0.19 | 0.32 | 0.38 |
| Amount of hydrogen absorption per unit mass of active metal, (2) (ml/g, 100°C) | | 1.1 | 1.1 | 2.8 | 3.2 |
| Degree of reduction × amount of hydrogen adsorption, (2) (ml/g) | | 0.86 | 0.88 | 2.30 | 2.82 |
| CO conversion rate (%) | | 35.0 | 37.0 | 47.2 | 51.2 |

**Claims**

1. A method for producing a catalyst for a Fischer-Tropsch synthesis, comprising:

   a reduction step of obtaining the catalyst for a Fischer-Tropsch synthesis through a reduction treatment of an unreduced catalyst,
   wherein the unreduced catalyst comprises a carrier obtained by calcining a carrier precursor containing silica and a zirconium compound, and cobalt oxide and/or ruthenium oxide carried on the carrier,
   a content of zirconium in the unreduced catalyst is 0.01 to 7% by mass in terms of zirconium oxide relative to a total mass of the unreduced catalyst, and
   in the reduction step, a reducing gas is brought into contact with the unreduced catalyst under conditions of a GHSV of 200 $h^{-1}$ or more and 1500 $h^{-1}$ or less and a linear velocity of 20 mm/s or more to perform the reduction treatment of the unreduced catalyst.

2. The method according to claim 1, wherein in the reduction step, the reduction treatment of the unreduced catalyst is performed such that a degree of reduction of cobalt atoms represented by the following expression (1) and/or a degree of reduction of ruthenium atoms represented by the following expression (2) of the catalyst for a Fischer-Tropsch synthesis is 75 to 93%:

$$\text{degree (\%) of reduction of cobalt atoms} = 100 \times [\text{mass of metal cobalt atoms}]/[\text{mass of total cobalt atoms}] \ ...(1)$$

$$\text{degree (\%) of reduction of ruthenium atoms} = 100 \times [\text{mass of metal ruthenium atoms}]/[\text{mass of total ruthenium atoms}] \ ...(2).$$

3. A catalyst for a Fischer-Tropsch synthesis produced by the method according to claim 1 or 2.

4. A method for producing a hydrocarbon, comprising a step of reacting carbon monoxide with hydrogen gas in the presence of a catalyst for a Fischer-Tropsch synthesis produced by the method according to claim 1 or 2 to obtain a hydrocarbon.

# EP 3 072 592 A1

<table>
<tr><td colspan="2" style="text-align:center"><b>INTERNATIONAL SEARCH REPORT</b></td><td>International application No.<br>PCT/JP2014/080529</td></tr>
</table>

**A. CLASSIFICATION OF SUBJECT MATTER**

*B01J37/18*(2006.01)i, *B01J23/46*(2006.01)i, *B01J23/75*(2006.01)i, *C07C1/06*(2006.01)i, *C07C9/00*(2006.01)i, *C07B61/00*(2006.01)n

According to International Patent Classification (IPC) or to both national classification and IPC

**B. FIELDS SEARCHED**

Minimum documentation searched (classification system followed by classification symbols)
B01J37/18, B01J23/46, B01J23/75, C07C1/06, C07C9/00, C07B61/00

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2012-213678 A  (Japan Oil, Gas and Metals National Corp.),<br>08 November 2012 (08.11.2012),<br>claims; examples<br>& US 2014/0018454 A1    & EP 2692431 A1<br>& CA 2830973 A1 | 3,4<br>1,2 |
| A | WO 2011/108347 A1  (JX Nippon Oil & Energy Corp.),<br>09 September 2011 (09.09.2011),<br>claims; examples<br>& US 2012/0329890 A1    & CA 2791267 A1<br>& CN 102781574 A | 1-4 |

☒ Further documents are listed in the continuation of Box C.        ☐ See patent family annex.

| | |
|---|---|
| *    Special categories of cited documents:<br>"A"  document defining the general state of the art which is not considered   to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>     19 January 2015 (19.01.15) | Date of mailing of the international search report<br>     17 February 2015 (17.02.15) |
|---|---|
| Name and mailing address of the ISA/<br>     Japan Patent Office<br>     3-4-3,Kasumigaseki,Chiyoda-ku,<br>     Tokyo 100-8915,Japan | Authorized officer<br><br><br>Telephone No. |

Form PCT/ISA/210 (second sheet) (July 2009)

**14**

**INTERNATIONAL SEARCH REPORT**

International application No.

PCT/JP2014/080529

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-177626 A (JX Nippon Oil & Energy Corp.), 15 September 2011 (15.09.2011), claims; examples & WO 2011/105118 A1 & US 2013/0041052 A1 & CA 2790389 A1 & CN 102770204 A | 1-4 |
| A | JP 61-035854 A (Shell Internationale Research Maatschappij B.V.), 20 February 1986 (20.02.1986), claims; examples & GB 2161716 A & EP 0168894 A2 | 1-4 |
| A | JP 2003-519011 A (Exxon Research & Engineering Co.), 17 June 2003 (17.06.2003), claims; examples & WO 2001/049809 A1 & CA 2395682 A1 | 1-4 |
| P,X | WO 2014/046009 A1 (JX Nippon Oil & Energy Corp.), 27 March 2014 (27.03.2014), paragraphs [0150] to [0152] (Family: none) | 1-4 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H4227847 B
- JP S59102440 B

**Non-patent literature cited in the description**

- **E.P. BARRETT ; L.G JOYNER ; P.H. HALENDA.** *J. Am. Chem. Soc.,* 1951, vol. 73, 373